# EUROPEAN PATENT APPLICATION

(11) **EP 0 810 113 A2**
(43) Date of publication of application: **03.12.1997**
(21) Application number: 97830250.3
(22) Date of filing: 28.05.1997
(51) Int. Cl.: B60K 15/06

(54) **Method for the control of fuel replenishments and related apparatus**

(30) Priority: 31.05.1996 IT BO960293
(71) Applicant: ADVENT S.r.l., I-38100 Trento (IT)
(72) Inventor: Virdia, Antonio, 38070 Sopramonte (Trento) (IT)
(74) Representative: Lanzoni, Luciano

(57) **Abstract**

A method and a related apparatus for the control of fuel replenishments in a vehicle tank, comprising the following phases: measurement of the level ofthe fuel contained in the tank by means of the measuring device fitted to the vehicle, with the emission of a first electrical signal (S1) related to that level; measurement of the voltage presented by the electrical power supply circuit of the vehicle, with the emission of a second electrical signal (S2) related to the value of the tension at the instant of execution of said measurement of the fuel level; processing of the first signal (S1) and the second signal (S2), with the determination of an index (I2) related to the quantity of fuel contained in the tank, function of the two signals (S1, S2), i.e. independent of the variations in the voltages ofthe electrical power supply circuit of the vehicle; storage, directly aboard said vehicle or remotely from the same, of a series of values (ΣI) related to the index (I2), usable as reference parameters in controlling the replenishment.

## Description

The present invention relates to a method and a related apparatus for the control of fuel replenishments. In particular, the invention relates to a method and an apparatus to be used to verify the actual quantity of fuel introduced in a tank, i.e. the correspondence between the quantity of fuel declared as having been poured into the tank and the quantity actually poured in.

The apparatus finds a preferable application in those cases in which the person (physical or legal) who bears the costs related to the fuel of a vehicle does not coincide with the person entrusted with driving the same or anyway with the person who is having the fuel replenished.

A typical example of this situation is represented by firms provided with a vehicle pool whose fuel replenishments are handled autonomously by the various drivers. Generally, when replenishments are not performed at refuelling stations within the firm, the drivers themselves notify the firm of the quantities of fuel purchased and are reimbursed for the equivalent of the amount spent.

Currently, fuel quantity is controlled by filling in appropriate forms where fuel amounts and the related expenses incurred are indicated. These forms are filled in manually by the driver of the vehicle and they are stamped and/or initialled by the attendant of the petrol station where the replenishment is performed.

With such control procedures, especially in the cases of tanks with capacities of the order of some hundreds of litres, it is relatively easy to declare consumptions-expenses which differ from those actually introduced in the tank.

The purpose of the present invention is therefore to eliminate this possibility with a method and a related apparatus which allow an accurate control of the fuel actually introduced in the tank, i.e. to allow an accurate measurement of the fuel actually introduced in the tank, with the added goal of eliminating this possibility for fraud.

The invention allows to measure the level of fuel contained in the tank by analysing the electrical signals coming from the measuring instruments normally fitted to the vehicle, in particular by correlating first the signal coming from the tank with that pertaining to voltage variations in the vehicle power supply circuit. In this way, the detection of the fuel level present in the tank is independent from voltage variations. The values related to level measurements constitute data which are usable for subsequent checks and processing.

Subsequently, the signal thus conditioned, pertaining to the quantity of fuel actually contained in the tank to which is overlaid the noise due to splashes caused by bumps, accelerations and decelerations, uphill and downhill stretches, is correlated with the signal related to the distance travelled by the vehicle and/or to the one related to the time elapsed with engine running, by means of suitable interpolating operations aimed at eliminating or at least minimising the effects of said noise. Said correlation also allows to derive by means of extrapolation, should it be found necessary, the quantity of fuel contained in the tank also in those areas where the level sensor no longer operated, such as the area corresponding with the nearly empty tank and the one corresponding to the nearly full tank.

The data, once derived, can be stored in appropriate memorisation means aboard the vehicle and/or transferred (periodically or continuously) into external storage and processing means.

Among the advantages of the invention, in addition to the correctness of the data pertaining to the quantity of fuel in the tank, the fact to be stressed is that the method (or the related apparatus) can easily be installed using essentially the instrumentation already existing aboard a vehicle.

The technical characteristics of the invention, according to the aforesaid purposes, can clearly be seen from the content of the claims reported below and its advantages shall be made more evident in the description that follows, made with reference to the enclosed drawings, which show an embodiment provided purely by way of non limiting example, in which:
- Figure 1 shows a block diagram of an embodiment of an apparatus according to the present invention;
- Figures 2, 3, 4 show diagrams related to possible examples of presentation of the data obtainable by means of the present invention.

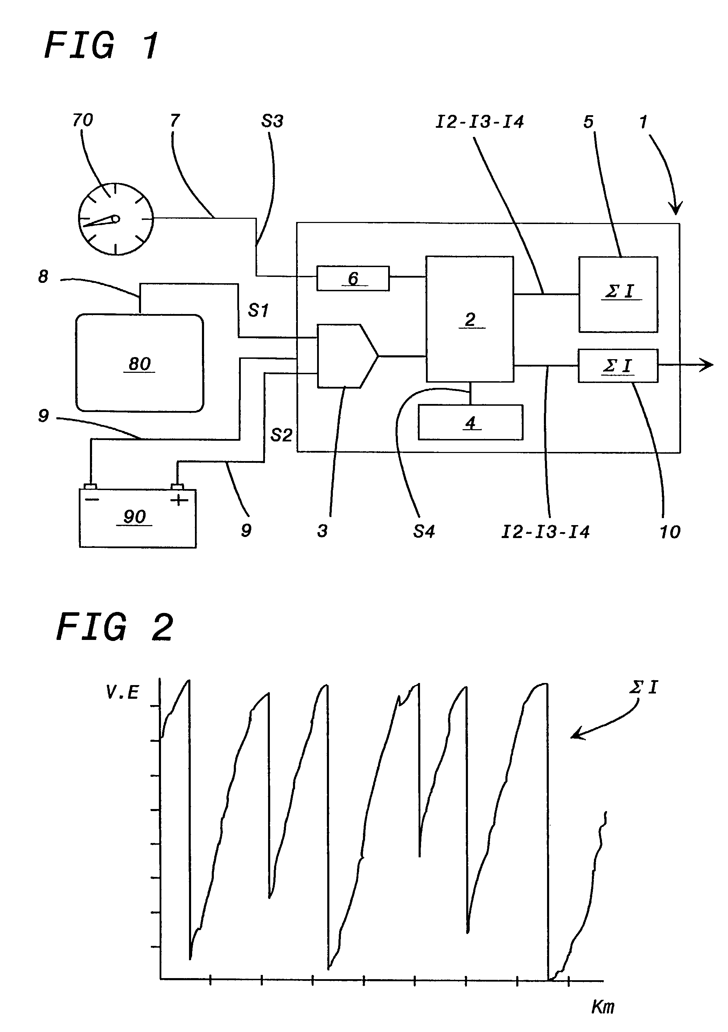

In the course of the present description reference shall be made to the example represented in the figures, describing the method together with the specific embodiment of the apparatus represented by way of example in figure 1, without thereby limiting the scope of the invention.

To execute the subject method, aboard a vehicle is installed an apparatus, indicated as 1 in its entirety in the example shown in Figure 1.

Still with reference to the non limiting example shown in Figure 1, the apparatus 1 can comprise a processing unit 2 suitably programmed and connected to an Analogue/Digital Converter (ADC) 3, to a clock 4 (providing a related signal S4) and to data storage means, such as a nonvolatile read and write memory 5. The apparatus 1 can also be connected to a counter 6 and to a data input/output unit 10.

The apparatus 1 is connected to the electrical power supply system of the vehicle, represented schematically by the symbol of a battery 90 and by a circuit 9 in Figure 1; on circuit 9 is present a given voltage, from which the apparatus obtains a related signal S2.

The apparatus 1 is also connected to the fuel level gauge in a tank 80 via a related circuit 8 providing a corresponding electrical signal S1.

Moreover, to the processing unit 2 of the apparatus 1 arrives an additional electrical signal S3 from the on-board odometre 70, through a related circuit 7 connected to the aforesaid counter 6.

During vehicle motion, the system continually acquires the electrical value of the signal S1 from the tank, normalises it taking into account power supply voltage variations (signal S2), since variations in power supply voltage cause a proportional variation in the voltage coming from the fuel tank sensor; moreover, it can correlate this signal with the distance travelled, obtained from the counter 6 and with the time data. The data are then saved in the non volatile memory 5. Figure 2 shows a possible representation of the data thus obtained, where the y-axis indicates an electrical value V.E. and the x-axis a value Km related to the kilometres travelled.

In the example shown in Figure 1, as in the claims, the symbols I2, I3 and I4 have been used to indicate, respectively, indices related to processing runs having as their object at least a second signal S2, the third signal S3 and the fourth signal S4.

In order to reduce the quantity of information stored, the processing unit can interpolate the values over routes of arbitrary distances, thus simply storing the equation describing the interpolated value or only the initial and final values of each route resulting from the interpolation operation.

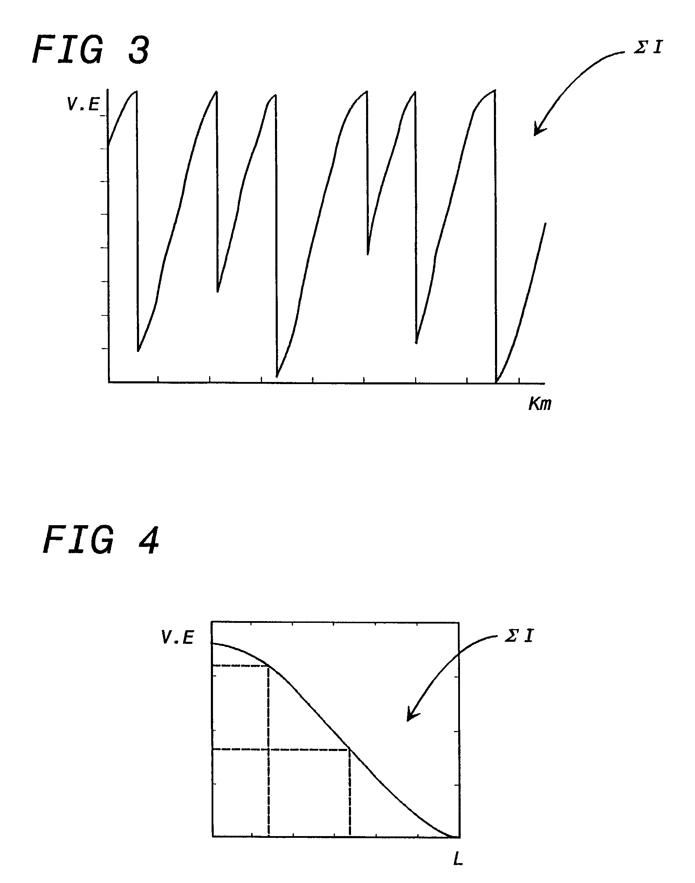

The interpolation can be both linear and non linear. A non linear interpolation will better approximate the actual curve. A possible result of this interpolation is represented in Figure 3, where the vertical sections represent fuel replenishments and where on the x-axis and y-axis are represented the same values as in the graph in Figure 2. The interpolation operation also allows to obtain a curve which is more immune to intrinsic errors in the tank-float system and which therefore is closer to the actual fuel level values.

The data thus collected can periodically be unloaded through the input/output unit 10 and other storage and/or processing devices such as microchip boards, dedicated microprocessors and/or personal computers.

The input/output unit 10 can be both of the "contact" type, i.e. making use of connectors, and without contact or "wireless", i.e. making use of light rays, radio or acousting waves to transfer the digital information.

Information can be transferred coupled with the time data coming from clock 4 which allow, at subsequent times, to reconstruct the time sequence of the replenishment/consumption cycles.

A second interpolation, that is to say an interpolation of the interpolated values, possibly accompanied by data filtering operations aimed at eliminating higher frequency interference, caused by splashes and bumps, can be performed on external processing devices. This operation allows further to refine the curves and to make them approximate the ideal curves even more closely.

The electrical signal coming from the tank normally does not have a linear relationship with the quantity of fuel contained, but is correlated through a curve or a correlation function which varies from vehicle to vehicle according to tank shape, to the linearity of the installed fuel sensor, etc. The only common characteristic shared by all vehicles is the monotonicity of said curve. An example of possible correlation curve is shown in Figure 4.

The calculation of the quantities of fuel introduced in the tank at each replenishment starting from the data acquired by the system requires the system itself to know the correlation function for that particular vehicle. Learning the correlation curve entails emptying the vehicle tank completely, introducing small known quantities of fuel and observing the corresponding electrical value of the system coming from the float. Since the float is normally provided with damping devices and therefore responds slowly to level variations, at each step of the procedure described above it is necessary to wait a sufficient time for the electrical signal to stabilise.

To eliminate this characteristic, it is possible to use, as an integral part of the present invention, a method for acquiring the correlation curve by means of self-learning This integral part can be implemented on the device described in Figure 1 or, alternatively, on an external processing device such as a personal computer.

The concept it is based on is the following: some replenishments of the vehicle can be performed under the direct control of those responsible for managing the vehicle pool and therefore can be defined as "sure", i.e. they are certain both in regard to the quantity of fuel actually inserted into the tank and to the date and time of the replenishment and vehicle odometre reading.

The processing device is provided with a list of safe replenishments, complete with kilometre quantity, date and time information. The device identifies on the graph (see Figure 3), coming from the acquisition unit, the corresponding electrical signal variations and creates a table associating the quantities of litres and the initial and final electrical values of each individual "sure" replenishment. As the number of "sure" replenishments rises, the quantity of information available to the system increases.

The system can thus rely on information it can use to reconstruct the correlation curve; such reconstruction can be obtained through different types of mathematical algorithms or through less traditional approaches such as, for instance, that of neural networks. The resulting correlation curve shall better approximate the ideal one in the areas where the "sure" replenishments fell more frequently, whilst it will depart from it more or less significantly in the areas not covered by certain replenishments. If the "sure" replenishments are performed taking care to cover more or less regularly all the areas of the tank, the resulting tank will coincide with excellent approximation with the ideal one. It shall always be possible to add new "sure" replenishment obtaining, as a result, an improvement in overall performance. In this way, the apparatus 1 is able to compute with good accuracy the fuel quantities inserted (or removed), though not "sure", simply by referring to the computed correlation curve the initial and final electrical value of each individual replenishment and computing its projection on the axis of the litres as in the graph shown in Figure 4, where V.E. indicates a value scale related to an electrical value and L a scale related to litres.

The invention thus conceived can be subject to numerous modifications and variations, without thereby departing from the scope of the inventive concept. Moreover, all components may be replaced with technically equivalent elements.

## Claims

1. Method for the control of fuel replenishments in a tank of a vehicle, characterised in that it comprises the following phases:
- measurement of the fuel level contained in said tank by means of the measuring device the vehicle is already fitted with, with the emission of a first electrical signal (S1) related to the level itself;
- measurement of the voltage presented by the electrical power supply of the vehicle, with the emission of a second electrical signal (S2) related to the value of the voltage in the instant said fuel level measurement is made;
- processing said first signal (S1) and second signal (S2), with the determination of an index (I2) related to the quantity of fuel contained in the tank, function of said first (S1) and of said second signal (S2), i.e. independent of the variations in the voltage of the electrical power supply of the vehicle;
- storing, directly aboard said vehicle or remotely from it, a series of values (ΣI) related to said index (I), usable as reference parameters when controlling the replenishment.

2. Method according to claim 1, characterised in that it also comprises the following phases:
- measurement of the distance travelled by the vehicle by means of the measuring device the vehicle is equipped with, i.e. of the odometre, with the emission of a third electrical signal (S3) related to the distance travelled;
- processing said first signal (S1), second signal (S2) and third signal (S3), determining an index (I3) related to the fuel quantity contained in the tank, function of said first (S1), of said second (S2) and of said third signal (S3);
- storing, directly aboard said vehicle or remotely from it, a series of values (ΣI) related to said index (I3), usable as reference parameters when controlling the replenishment.

3. Method according to claim 2, characterised in that said processing operation is carried out in correspondence with travel routes chosen arbitrarily and that the values obtained for each route are interpolated, so as to reduce the quantity of data to be stored and to perform a first filtering of said first signal (S1) from noise due to fuel splashing inside said tank, to bumps of said vehicle and to similar causes.

4. Method according to claim 1, characterised in that it comprises the execution of a time measurement providing a fourth electrical signal (S4) or time signal related to an elapsed penod of time and that said processing operation is related at least to said first signal (S1), second signal (S2) and fourth signal (S4).

5. Method according to claim 2, characterised in that it comprises a time measurement providing a fourth electrical signal (S4) or time signal related to a period of time corresponding to a period of travel of the vehicle and that said processing operation is related at least to said first signal (S1), second signal (S2), third signal (S3) and fourth signal (S4).

6. Method according to claim 1, characterised in that it comprises, prior to the aforesaid phase, a self-learning procedure constituted by the storage of data related to sure replenishments, i.e. of data related to certain and verified quantities of fuel introduced into the tank (80) and of their association with the corresponding signal (S1), related to the tank level signal, so as to produce a table associating said certain data and said related tank signals, usable for subsequent processing operations.

7. Apparatus for the control or fuel replenishments in a vehicle tank characterised in that it comprises:
- a device for measuring the level of fuel contained in said tank (80) connected and/or comprising the measuring device fitted on the vehicle, able to emit a first electrical signal (S1) related to the level;
- a device for measuring the voltage presented by the electrical power supply circuit (9) of the vehicle, able to emit a second electrical signal (S2) related to the value of the voltage at the instant of execution of said measurement of said level;
- means for processing (2) said first signal (S1) and second signal (S2), able to determine an index (I2) related to the quantity of fuel contained in the tank, function of said first (S1) and of said second signal (S2), i.e. independent of the variations in the electrical power supply circuit of the vehicle;
- data storage means (5), located aboard said vehicle or remotely from it, for storing a series of values (ΣI) related to said index (I2), usable as reference parameters in controlling the replenishment.

8. Apparatus according to claim 7, characterised in that it also comprises:
- a device for measuring the distance (70) travelled by the vehicle connected or comprising the measuring device fitted to the vehicle, i.e. the on-board odometre, able to emit a third electrical signal (S3) related to the distance travelled;
- means for processing (2) said first signal (S1), second signal (S2) and third signal (S3), able to determine an index (I3) related to the fuel quantity contained in the tank, function of said first signal (S1), of said second signal (S2) and of said third signal (S3);
- data storage means (5), located aboard said vehicle or remotely from it, for storing a series of values (ΣI) related to said index (I2), usable as reference parameters in controlling the replenishment.

9. Apparatus according to claim 7, characterised in that it comprises a time measuring device (4) providing a fourth electrical signal (S4) or time signal related to an elapsed period of time and that said processing means (2) are able to process at least said first signal (S1), second signal (S2) and fourth signal (S4).

10. Apparatus according to claim 8, characterised in that it comprises a time measuring device (4) providing a fourth electrical signal (S4) or time signal related to a period of time corresponding to a period of travel of the vehicle and in that said processing means (2) are able to process at least said first signal (S1), second signal (S2), third signal (S3) and fourth signal (S4).
